# FASCICULE DE BREVET EUROPEEN

(11) **EP 0 669 533 B1**
(45) Date de publication et mention de la délivrance du brevet: **04.12.2002**
(21) Numéro de dépôt: 95400357.0
(22) Date de dépôt: 21.02.1995
(51) Int. Cl.: G01N 35/10, G01N 35/00

(54) **Dispositif d'analyses automatisé, à cuves fixes**
Automatisches Analysegerät mit feststehenden Behältern
Automatic analyser with fixed containers

(30) Priorité: 23.02.1994 FR 9402045
(43) Date de publication de la demande: 30.08.1995
(73) Titulaire: COMPAGNIE GENERALE DES MATIERES NUCLEAIRES, 78140 Velizy Villacoublay (FR)
(72) Inventeur: Besnier, Joseph, F-50440 Beaumont-Hague (FR); Ringot, Gilbert, F-50460 Querqueville (FR)
(74) Mandataire: Poulin, Gérard

(56) Documents cités:
- EP-A- 0 286 536
- EP-A- 0 509 919
- EP-A- 0 532 404
- US-A- 4 359 447
- US-A- 4 601 881
- REVIEW OF SCIENTIFIC INSTRUMENTS, USA, VOL. 59, NO. 12, PAGES 2609 - 2615, ISSN 0034-6748, SWEILEH J A ET AL 'Novel automated micro batch analyzer'

## Description

L'invention concerne un dispositif d'analyses conçu pour pouvoir effectuer, de façon automatisée, plusieurs analyses sur un même échantillon liquide.

L'invention s'applique avantageusement, bien que de façon non exclusive, à la réalisation de plusieurs analyses chimiques sur des échantillons liquides prélevés en différents points d'une chaîne de fabrication où de traitement de produits tels que des produits radioactifs.

Dans le cadre de cette dernière application, le dispositif d'analyses selon l'invention peut notamment être utilisé dans une installation automatisée telle que celle qui est décrite dans le document FR-A-2 675 582. Dans cette installation, des produits liquides sont prélevés de façon automatisée en différents points d'une chaîne de fabrication ou de traitement et introduits dans des cruchons étanches. Ces derniers sont ensuite transférés automatiquement dans des boîtes d'analyses par des circuits de transfert pneumatiques.

Si l'installation décrite dans le document FR-A-2 675 582 permet d'effectuer de façon automatique le prélèvement des échantillons et leur transfert dans des boîtes d'analyses, les opérations qui sont ensuite effectuées à l'intérieur de ces boîtes sont réalisées manuellement à l'aide de pinces de manutention. Ainsi, les cruchons tombés en vrac dans le fond des boîtes d'analyses doivent être ensuite identifiés par lecture d'un code et ouverts à l'aide d'une pince. Des prélèvements sont ensuite effectués dans le cruchon ouvert au moyen d'une pipette de laboratoire. Enfin, toutes les opérations nécessaires à la réalisation des analyses souhaitées (l'ajout de réactifs, les transvasements etc.) sont réalisées manuellement, en s'aidant des pinces de manutention et en utilisant du matériel de laboratoire classique tel que des seringues, de la verrerie, etc..

Lorsqu'elles sont appliquées à la surveillance d'une chaîne de fabrication ou de traitement industriel, ces opérations sont inadaptées et présentent un risque d'erreur non négligeable. De plus, elles sont fastidieuses et coûteuses et conduisent à multiplier les déchets solides, comme les effluents liquides, du fait notamment qu'une seule analyse est possible sur un même échantillon.

Par ailleurs, l'automatisation des analyses chimiques effectuées dans les boîtes d'analyses précitées ne peut se faire sans prendre en compte un certain nombre de facteurs.

Un premier de ces facteurs concerne le souhait de pouvoir équiper progressivement de dispositifs d'analyses automatisés les boîtes d'analyses existantes, sans avoir à remplacer totalement ces boîtes.

Par ailleurs, lorsqu'il s'agit de procéder à l'analyse de produits radioactifs, la conception d'un tel dispositif d'analyses doit prendre en compté les contraintes imposées par ce type de produits. Ainsi, les technologies utilisées doivent être fiables et permettre une maintenance à l'aide des pinces de manutention équipant la boîte. De plus, les protections radiologiques doivent être assurées en tenant compte aussi bien de l'irradiation que de la contamination. Pour tenir compte de ce dernier point, l'amplitude des déplacements doit être limitée afin d'empêcher la progression dans le temps de la contamination vers l'extérieur des boîtes d'analyses.

Par ailleurs, même s'il n'est pas exclu, dans certains cas, de n'avoir à réaliser qu'une seule analyse sur un même échantillon, il est souhaitable, notamment afin de diminuer la quantité de déchets solides et d'effluents liquides, de pouvoir effectuer simultanément plusieurs analyses sur un échantillon unique contenu dans un même cruchon. Pour ne pas rendre le système trop complexe, cela conduit à rendre le dispositif d'analyses totalement indépendant des systèmes automatisés susceptibles d'être placés en amont de ce dispositif à l'intérieur des boîtes d'analyses, notamment pour assurer l'ouverture des cruchons et le prélèvement des échantillons. Ces systèmes placés en amont, qui ne font pas partie de la présente invention, peuvent notamment être gérés par un automate programmable alors que la mise en oeuvre du dispositif d'analyses selon l'invention, qui conduit à prendre en compte des valeurs analogiques, des temporisations, des volumes, des potentiels, etc. requiert l'utilisation d'un microprocesseur.

Le document US-A-4 359 447 concerne un appareil conçu pour réaliser simultanément plusieurs analyses chimiques sur un même échantillon, ou groupe d'échantillons, liquide. Le liquide, initialement contenu dans un tube à essai, est aspiré par une pompe, de façon à remplir deux tronçons tubulaires aménagés dans un distributeur rotatif. Après une rotation de 90° du distributeur, des réactifs sont injectés dans chaque tronçon tubulaire, de telle sorte que les échantillons prélevés et les réactifs correspondants sont transférés dans des micro cuvettes, dans lesquelles sont effectuées des mesures photométriques.

L'article de Sweileh J.A. et al. "Novel automated micro batch analyzer" dans "Review of Scientific Instruments", USA, vol. 59, N° 12, pages 2609-2615, ISSN 0034-6748 divulgue un dispositif d'analyses automatisé comprenant une chambre de réaction dotée d'un agitateur à bulles et dans laquelle peuvent être injectés un échantillon à analyser ainsi que différents réactifs. Le mélange est ensuite dirigé vers un égout en traversant une cellule de détection optique équipée d'une photodiode qui détecte la lumière transmise au travers du mélange et d'un filtre adapté. Les transferts de l'échantillon et des réactifs dans la chambre de réaction, puis du mélange au travers de la cellule de détection optique sont effectués par un gaz porteur sous pression, lors de l'ouverture de vannes.

L'invention a pour objet un dispositif d'analyses automatisé susceptible notamment, mais non exclusivement, d'être utilisé dans une installation automatisée telle que celle qui est décrite dans le document FR-A-2 675 582, par exemple en association avec un dispositif permettant d'ouvrir les cruchons et de prélever les échantillons liquides dans ces derniers, afin de permettre une automatisation complète des analyses réduisant à une valeur minimale les déchets solides ainsi que les effluents liquides, tout en améliorant sensiblement la productivité.

Conformément à l'invention, ce résultat est obtenu au moyen d'un dispositif d'analyses automatisé, comprenant :
- au moins deux lignes d'analyses incluant chacune :
   - une cuve fixe de préparation chimique ;
   - des moyens d'agitation d'un liquide placé dans la cuve ;
   - des moyens d'injection de réactifs dans la cuve ;
   - une cuve d'analyse équipée de moyens d'analyse ;
   - une ligne de transfert du liquide placé dans la cuve de préparation dans la cuve d'analyse, puis de la cuve d'analyse vers un système d'évacuation d'effluents ;
   - une ligne de vidange reliant directement la cuve de préparation chimique au système d'évacuation des effluents ;
- des moyens distributeurs pour introduire un échantillon de liquide à analyser dans au moins l'une des cuves de préparation chimique ; et
- des moyens de gestion pilotant au moins les moyens d'agitation, les moyens d'injection, les moyens d'analyse, la ligne de transfert et la ligne de vidange,
dans lequel chaque ligne de transfert comprend un premier tube reliant la cuve de préparation chimique à la cuve d'analyse, un deuxième tube reliant la cuve d'analyse à un premier éjecteur à air commun à toutes les lignes d'analyse et relié au système d'évacuation des effluents, et une vanne placée dans le deuxième tube, en amont de l'éjecteur à air.

L'utilisation d'un tel dispositif permet de réaliser simultanément et de façon automatisée plusieurs analyses sur un même échantillon liquide. En plus de l'automatisation des analyses, le caractère simultané de celles-ci permet un gain de temps considérable puisque la durée totale des analyses ne dépasse pas la durée de l'analyse la plus longue.

De plus, l'automatisation des analyses permet de réduire les effluents liquides à une valeur minimale en limitant les quantités d'échantillons utilisées ainsi que les quantités de réactifs à des valeurs minimales. La quantité de déchets solides est également réduite par le fait que, lorsque le produit liquide à analyser est initialement contenu dans un cruchon, un prélèvement effectué dans celui-ci peut servir à réaliser plusieurs analyses. Le nombre de cruchons s'en trouve ainsi réduit.

Dans une forme de réalisation préférentielle de l'invention, les cuves de préparation chimique sont placées dans une enceinte étanche. Les moyens d'injection des réactifs comprennent alors au moins un appareil d'injection placé à l'extérieur de l'enceinte et au moins un catheter reliant cet appareil d'injection à la cuve de préparation chimique. Ce catheter traverse alors une bride de toit de l'enceinte et est placé, en dessous de cette bride, dans un tube-guide vertical.

Afin que la quantité de liquide admis dans la cuve d'analyse soit parfaitement contrôlée, l'éjecteur à air comporte avantageusement une alimentation en air moteur à pression constante et une temporisation programmée.

Dans la forme de réalisation préférentielle de l'invention, la ligne de vidange comprend un troisième tube reliant la cuve de préparation chimique à un deuxième éjecteur à air commun à toutes les lignes d'analyse et relié au système d'évacuation des effluents, et une deuxième vanne placée dans le troisième tube, en amont du deuxième éjecteur.

Chacune des vannes placées dans le deuxième et le troisième tubes est constituée soit par une électrovanne, soit par une vanne à commande pneumatique actionnée par une électrovanne de commande placée à l'extérieur de l'enceinte.

Pour permettre le rinçage et le séchage de la cuve de préparation chimique de chaque ligne d'analyse, cette ligne comprend aussi, de préférence, une conduite d'amenée de produit de rinçage dans la cuve de préparation chimique et une conduite de séchage de cette cuve.

Pour faciliter les opérations de maintenance, les cuves de préparation chimique de toutes les lignes d'analyse peuvent être montées sur un même plateau escamotable, mobile verticalement entre une position haute de travail et une position basse de maintenance.

En variante, chaque cuve de préparation chimique peut être placée sur un support individuel, apte à être monté, à l'aide d'une pince de manutention et en agissant sur un collier de fixation articulé, sur le tube guide vertical associé à la cuve considérée.

Les moyens distributeurs servant à alimenter les cuves de préparation chimique peuvent alors comprendre un embout d'aspiration vertical monté sur des moyens de positionnement, de façon à pouvoir être placé à volonté, par un actionnement de ces moyens de positionnement, au-dessus d'un récipient tel qu'un cruchon contenant le liquide à analyser ou au-dessus de l'une quelconque des cuves de préparation chimique.

Selon la nature des analyses à effectuer, chacune des lignes d'analyse peut également comprendre un ou plusieurs appareils de mesure ou de contrôle placés dans la cuve de préparation chimique et reliés à une instrumentation extérieure à l'enceinte par un câble vertical traversant la bride de toit de l'enceinte.

On décrira à présent, à titre d'exemples non limitatifs, deux formes de réalisation préférentielles de l'invention, en se référant aux dessins annexés, dans lesquels :
- la figure 1 est une vue de côté, en coupe partielle, illustrant schématiquement l'une des lignes d'analyse d'un dispositif d'analyses automatisé selon une première forme de réalisation de l'invention ;
- la figure 2 est une vue de dessus illustrant plus en détail un exemple de réalisation du dispositif d'analyses automatisé de la figure 1 ;
- la figure 3 est une vue de côté prise selon la flèche F de la figure 2 ;
- la figure 4 est une vue en coupe selon un plan horizontal d'un sous ensemble de contrôle et d'injection de réactif équipant une des lignes d'analyses du dispositif d'analyses automatisé des figures 2 et 3 ;
- la figure 5 est une vue en coupe selon la ligne V-V de la figure 4 ;
- la figure 6 est une vue de côté, en coupe partielle, illustrant une deuxième forme de réalisation de l'invention, dans laquelle chaque cuve de préparation chimique est montée sur un support individuel ; et
- la figure 7 est une vue en perspective illustrant un détail du support individuel de la figure 6.

Comme on le verra plus en détail par la suite, le dispositif d'analyses automatisé selon l'invention comprend au moins deux lignes d'analyses sur lesquelles peuvent être effectuées automatiquement, de façon simultanée, plusieurs analyses sur un même échantillon liquide.

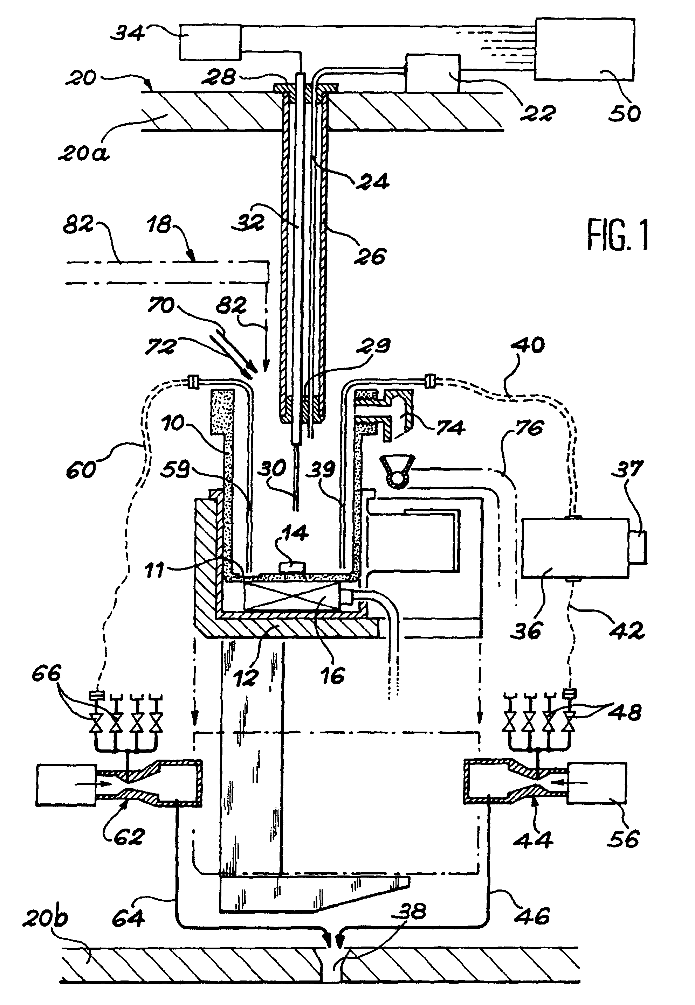

Toutes ces lignes d'analyses sont réalisées selon le même principe qui va à présent être exposé en se référant à la figure 1.

Chacune des lignes d'analyses du dispositif d'analyse automatisé selon l'invention comprend tout d'abord une cuve fixe 10 de préparation chimique. Dans la forme de réalisation illustrée sur les figures 1 à 5, les cuves 10 de toutes les lignes d'analyses sont montées sur un même plateau support horizontal 12 selon une disposition qui sera précisée par la suite.

Un agitateur 14 est placé dans chacune des cuves 10 de préparation chimique. Cet agitateur est actionné par un moteur 16, par exemple magnétique ou ultrasonique, placé sous le fond de la cuve. Le moteur 16 est monté dans le plateau support horizontal 12.

Des moyens distributeurs 18, qui seront décrits plus en détail par la suite, permettent d'introduire un échantillon à analyser dans une ou plusieurs des cuves 10 de préparation chimique. Il est à noter que les moyens distributeurs 18 sont communs à toutes les lignes d'analyses du dispositif et pilotés indépendamment de ces lignes d'analyses, par exemple par un automate.

Dans les formes de réalisation illustrées sur les figures, qui concernent le cas où les échantillons liquides à analyser sont radioactifs, les cuves 10 de préparation chimique ainsi que leur plateau support 12 et les moyens distributeurs 18, sont placés à l'intérieur d'une enceinte étanche 20 dont une bride de toit et un fond sont illustrés respectivement en 20a et 20b sur la figure 1.

Chacune des lignes d'analyses du dispositif d'analyses automatisé selon l'invention comprend également des moyens d'injection permettant d'introduire dans la cuve 10 de préparation chimique un ou plusieurs réactifs nécessaires à l'analyse envisagée ainsi que de l'eau servant éventuellement à diluer les produits admis dans la cuve. Ces moyens d'injection de réactifs comprennent des injecteurs 22 placés à l'extérieur de l'enceinte, par exemple au-dessus de la bride de toit 20a. Chacun de ces injecteurs 22 permet d'introduire dans la cuve 10 de préparation chimique considérée une quantité donnée de réactif par un catheter 24 formé par un microtube de polytétrafluoréthylène. Ce catheter 24 traverse la bride de toit 20a à la verticale de la cuve 10 de préparation chimique considérée et descend verticalement dans la cuve à l'intérieur d'un tube guide 26. Plus précisément, tous les cathéters 24 associés à une même cuve 10 de préparation chimique sont placés dans un même tube guide 26. Le tube guide 26 peut notamment être réalisé en acier inoxydable. Des bouchons 28 et 29, que traversent le ou les cathéters 24, obturent de façon étanche le tube guide 26 respectivement à ses extrémités supérieure et inférieure.

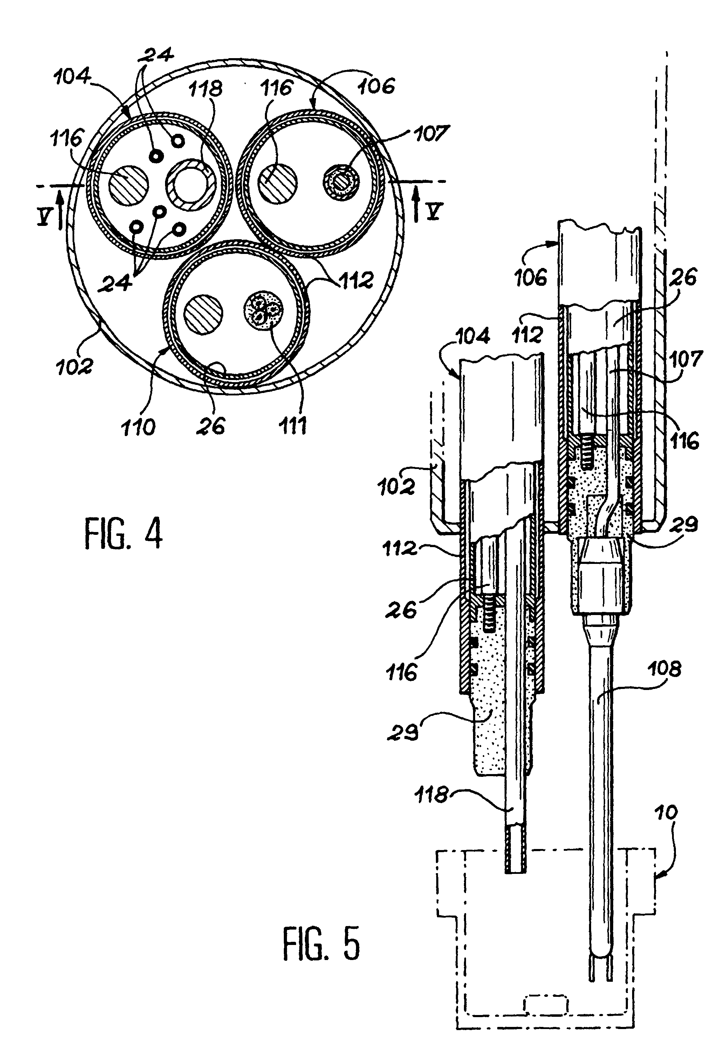

Des appareils de mesure ou de contrôle tels qu'une sonde de température, de conductimétrie, etc. peuvent être placés, si nécessaire, dans la cuve 10 de préparation chimique de certaines des lignes d'analyses. Un tel appareil 30 est représenté schématiquement sur la figure 1, en dessous du bouchon 29 obturant le tube guide 26 à son extrémité basse. On verra par la suite, en se référant aux figures 4 et 5, qu'un agencement différent peut être adopté dans la pratique. Selon la nature de l'appareil 30, un câble de liaison 32 électrique, optique ou autre relie l'appareil 30 à un système 34 d'alimentation et de mesure placé à l'extérieur de l'enceinte 20.

Chacune des lignes d'analyses du dispositif d'analyses automatisé selon l'invention comprend également une cuve d'analyse 36 conçue pour recevoir une quantité bien déterminée de la préparation chimique élaborée dans la cuve 10, afin de procéder à une analyse de l'échantillon considérée à l'aide d'un appareil d'analyse 37 équipant cette cuve d'analyse 36. Cet appareil d'analyse 37 peut notamment être un spectrophotomètre ou un chromatographe. Selon le cas, la cuve d'analyse 36 est implantée à l'intérieur ou à l'extérieur de l'enceinte 20. La forme de réalisation illustrée sur la figure 1 correspond à une implantation de cette cuve 36 à l'intérieur de l'enceinte.

Une ligne de transfert relie chacune des cuves 10 de préparation chimique à la cuve d'analyse 36 correspondante et relie cette cuve d'analyse à un système d'évacuation d'effluents matérialisé sur la figure 1 par un siphon 38 prévu dans le fond 20b de l'enceinte.

De façon plus précise, cette ligne de transfert comprend un tube rigide 39 qui plonge dans la cuve 10 de préparation chimique jusqu'à proximité du fond de cette cuve et un premier tube souple 40 reliant ce tube rigide 39 à la cuve d'analyse 36. La ligne de transfert comprend également un deuxième tube souple 42 qui relie la cuve d'analyse 36 à l'entrée d'un éjecteur à air 44. La sortie de l'éjecteur à air 44 est reliée au siphon 38 par un tube rigide 46.

Le dispositif d'analyses automatisé illustré sur les figures comprend un éjecteur à air 44 unique, commun à toutes les lignes d'analyses. Par conséquent, l'entrée de cet éjecteur à air 44 est reliée à chacune des cuves d'analyse 36 par un tube 42 incorporant une vanne 48.

Dans la forme de réalisation illustrée sur la figure 1, les vannes 48 sont des vannes à commande pneumatique qui sont pilotées par des électrovannes de commande (non représentées) placées à l'extérieur de l'enceinte 20. Ces électrovannes de commande sont placées sur des tuyauteries de commande reliant chacune des vannes 48 à une source d'air comprimé.

Dans une variante de réalisation non représentée, les vannes 48 sont des électrovannes, de préférence basse tension. Ces électrovannes peuvent notamment être noyées dans une résine protectrice, afin d'être totalement isolées de l'atmosphère éventuellement corrosive contenue dans l'enceinte. Par rapport à la forme de réalisation illustrée sur la figure 1, cette variante permet d'utiliser des vannes du commerce et de simplifier le système en divisant par deux le nombre de vannes. De plus, lorsque l'atmosphère est corrosive, la protection anticorrosion assurée par la résine est totale, ce qui n'est pas le cas des vannes à commande pneumatique, qui présentent obligatoirement un orifice d'échappement d'air.

L'éjecteur à air 44 est piloté par de l'air comprimé admis par une conduite (non représenté), au travers d'un système de commande 56 à débit contrôlé et temporisé.

Chacune des lignes d'analyses du dispositif d'analyses automatisé illustré sur la figure 1 comprend également une ligne de vidange permettant d'évacuer les produits présents dans la cuve 10 de préparation chimique directement vers le système d'évacuation des effluents matérialisé par le siphon 38, lorsque l'analyse est terminée.

Dans la forme de réalisation illustrée sur la figure 1, cette ligne de vidange comprend un tube rigide 59 qui plonge dans le fond de la cuve 10 de préparation chimique et un tube souple 60 qui relie le tube rigide 59 à un deuxième éjecteur à air 62. Afin de permettre la vidange complète de la cuve 10 de préparation chimique, cette cuve présente avantageusement un fond légèrement incliné (non illustré) dont le point bas forme une goulotte de récupération 11 et l'extrémité basse du tube rigide 59 plonge dans le fond de cette goulotte 11.

La sortie de l'éjecteur à air 62 est reliée par un tube rigide 64 au siphon 38.

De même que l'éjecteur à air 44, l'éjecteur à air 62 est un éjecteur unique commun à toutes les lignes d'analyses. Par conséquent, chacun des tubes souples 60 est relié à cet éjecteur à air 62 par l'intermédiaire d'une vanne 66. Comme les vannes 48, les vannes 66 peuvent être soit des électrovannes, soit des vannes à commande pneumatique pilotées par des électrovannes (non représentées) placées dans des conduites reliant chacune des vannes 66 à une source d'air comprimé.

L'éjecteur à air 62 est commandé par de l'air comprimé admis par une conduite (non représentée).

En plus de la vidange de la cuve 10 de préparation chimique, la ligne de vidange qui vient d'être décrite participe également au rinçage de cette cuve, conjointement avec une canalisation de rinçage 70 qui débouche également au-dessus de chacune des cuves 10 de préparation chimique. Cette canalisation de rinçage 70 peut être utilisé pour admettre dans la cuve 10 aussi bien de l'eau de rinçage qu'un autre produit de rinçage tel que de l'alcool susceptible de sécher rapidement lorsque de l'air est injecté dans la cuve 10 par une canalisation de séchage 72.

Enfin, il est à noter que la cuve 10 de préparation chimique est avantageusement équipée d'un système de trop plein 74 relié directement au siphon 38 par une canalisation 76.

Comme on l'a représenté très schématiquement sur la figure 1, des moyens de gestion tels qu'un microprocesseur 50 sont prévus, à l'extérieur de l'enceinte 20, pour commander toutes les fonctions du dispositif d'analyses selon l'invention, à l'exception des moyens distributeurs 18. Ainsi, le microprocesseur 50 pilote notamment les moteurs 16 des agitateurs 14, les injecteurs 22 et 34 de réactifs et d'eau, les systèmes de rinçage et de séchage associés aux tubes 70 et 72, les lignes de transfert et de vidange des cuves 10 de préparation chimique, ainsi que les appareils d'analyse 37.

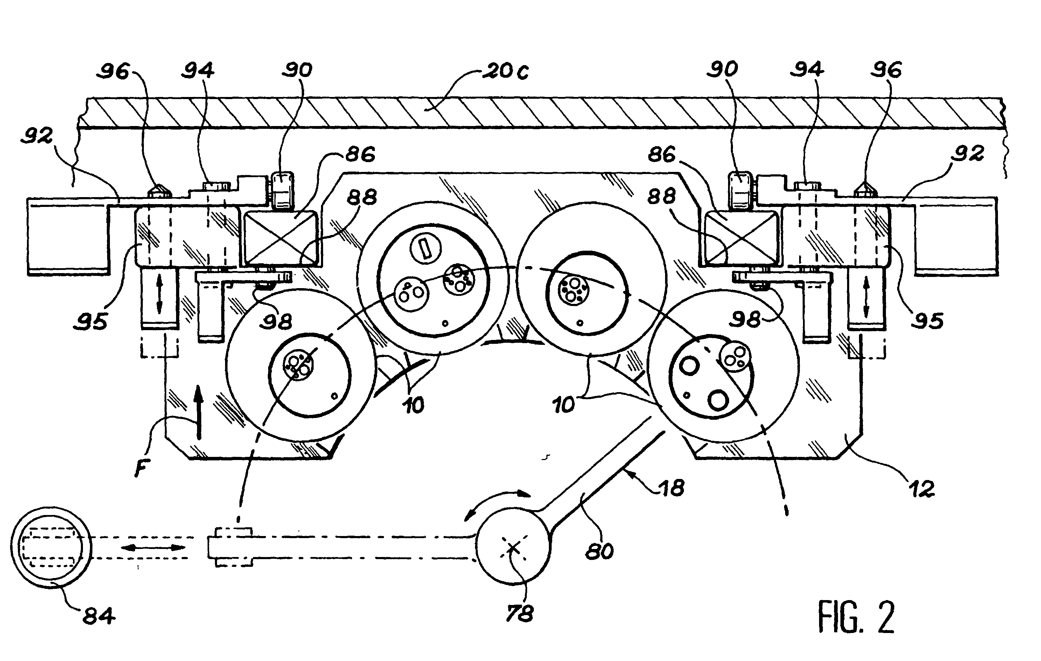

Un exemple de réalisation pratique d'un dispositif d'analyses automatisé comportant quatre lignes d'analyses réalisées selon la première forme de réalisation qui vient d'être exposée en se référant à la figure 1 va à présent être décrit en se référant aux figures 2 à 5.

En se référant tout d'abord à la figure 2, on voit que, dans cette forme de réalisation de l'invention, le plateau support horizontal 12 porte quatre cuves 10 de préparation chimique. Ces cuves 10 sont des cuves identiques qui présentent en section une forme circulaire, les centres de ces cercles étant situés à égale distance les uns des autres sur un arc de cercle centré sur un axe vertical 78. Cet axe vertical 78 sert d'axe de rotation à un bras horizontal 80, éventuellement télescopique, appartenant aux moyens de distribution 18 sur la figure 1.

A son extrémité opposée à l'axe 78, le bras horizontal 80 porte un embout d'aspiration 82 (figure 1) susceptible d'être placé au-dessus de l'une quelconque des cuves 10 de préparation chimique et au-dessus d'un cruchon 84 contenant le liquide à analyser, lors d'une rotation du bras 80 autour de l'axe 78.

Si le cruchon 84 n'est pas situé sur le même arc de cercle que les cuves 10 de préparation chimique, comme on l'a illustré sur la figure 2, le bras 80 est télescopique. En outre, il est animé d'un mouvement de montée et de descente autorisant, en position haute, son déplacement au-dessus des cuves 10 et du cruchon 84 et, en position basse, l'aspiration du liquide contenu dans le cruchon par l'embout d'aspiration 82. Les différents moteurs commandant les mouvements précités du bras 80 sont avantageusement placés à l'extérieur de l'enceinte et notamment au-dessus de la bride de toit 20a. Ils sont pilotés par un automate (non représenté) indépendamment des appareils constituant le dispositif d'analyses automatisé selon l'invention.

Le plateau support horizontal 12 portant les cuves 10 de préparation chimique occupe une position fixe à l'intérieur de l'enceinte lorsque le dispositif d'analyses automatisé est en état de marche. La structure par laquelle le plateau 12 est fixé à l'intérieur de l'enceinte est toutefois prévue pour permettre le démontage du plateau 12 ainsi que son déplacement entre une position haute de travail, dans laquelle les catheters 24, comme les appareils 30 plongent dans les cuves 10 de préparation chimique qui leur correspondent et une position basse de maintenance, permettant d'effectuer des interventions de maintenance sur ces tubes et sur ces appareils.

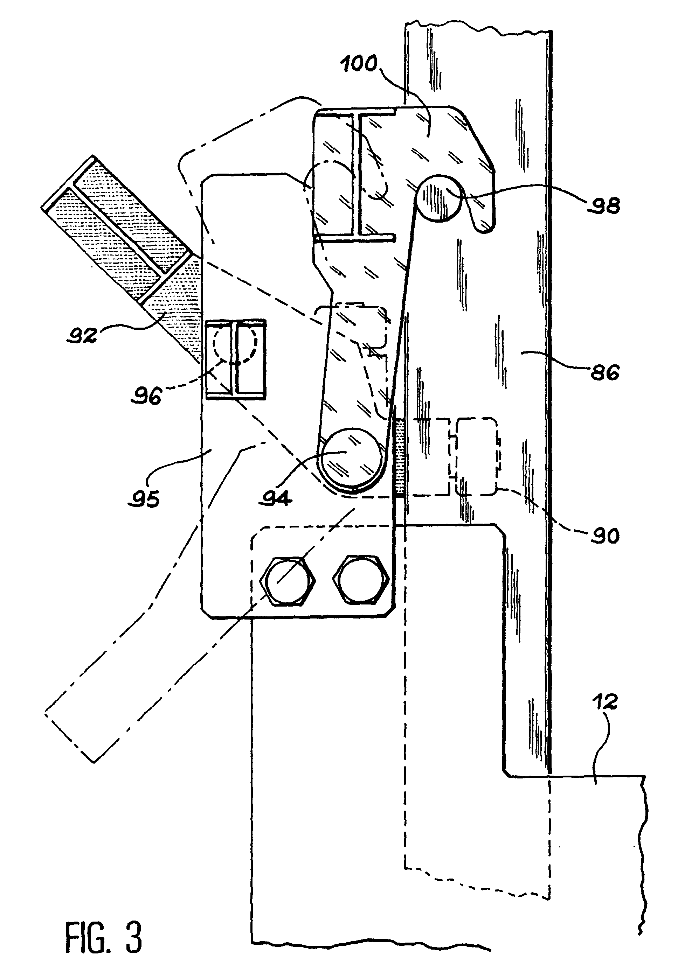

Un exemple de réalisation d'une structure support permettant le démontage du plateau 12 ainsi que sa descente en position basse de maintenance va à présent être décrit en se référant aux figures 2 et 3.

Le montage du plateau support horizontal 12 à l'intérieur de l'enceinte est assuré par deux piliers verticaux 86 situés à proximité de la paroi arrière 20c de l'enceinte. Sur son bord arrière tourné vers la paroi 20c, le plateau 12 comporte deux encoches rectangulaires 88 prévues pour s'emboîter sur les piliers 86. La face arrière de chacun des piliers 86 est normalement en appui contre un galet 90, d'axe horizontal, porté par un levier 92 articulé sur le plateau horizontal 12 par un axe horizontal 94. Plus précisément, cet axe horizontal 94 est monté dans une pièce 95 fixée sur le plateau 12. Le levier 92 est normalement immobilisé par un doigt de verrouillage 96 dans la position illustrée en trait plein sur les figures 2 et 3, dans laquelle le galet 90 est en contact avec la face arrière du pilier 86 correspondant.

Le mécanisme qui vient d'être décrit assure normalement une liaison coulissante entre le plateau 12 et les piliers 86 tant que les doigts de verrouillage 96 ne sont pas escamotés.

Lorsqu'il est nécessaire de démonter le plateau 12, un opérateur escamote à l'aide de pinces les doigts de verrouillage 96, ce qui libère les leviers 92 et autorise leur rotation, par gravité, autour de leurs axes 94. Les leviers 92 viennent alors occuper automatiquement une position illustrée en traits mixtes sur la figure 3, dans laquelle les galets 90 sont effacés latéralement vers l'extérieur par rapport aux faces arrières des piliers 86. Le plateau 12 peut alors être séparé des piliers 86.

Afin d'immobiliser normalement le plateau support 12 le long des piliers 86 dans sa position haute de travail, chacun de ces piliers comporte sur sa face avant un pion horizontal 98 sur lequel peut venir se placer un crochet 100 articulé sur la pièce 95, autour d'un axe horizontal avantageusement constitué par l'axe d'articulation 94 du levier 92.

Lorsqu'une intervention de maintenance nécessitant la descente du plateau support 12 doit être effectuée, l'opérateur soulève légèrement ce plateau à l'aide de pinces, puis fait basculer vers l'extérieur les crochets 100, dans la position escamotée illustrée en traits mixtes sur la figure 3. Le plateau 12 peut alors être descendu dans une position basse de maintenance ce qui dégage toute la zone dans laquelle sont situés notamment les catheters 24, les appareils 30 et les canalisations 70 et 72.

La configuration exacte des ensembles qui sont associés à chacune des cuves 10 de préparation chimique et par lesquels les réactifs, l'eau de dilution, le liquide de rinçage et l'air de séchage sont amenés dans la cuve dépend de la nature des analyses qui doivent être effectuées ultérieurement dans la cuve d'analyse 36 de la ligne d'analyses correspondante. Le nombre et la nature des appareils 30 éventuellement supportés par ces ensembles dépendent également de la nature de ces analyses.

Comme l'illustrent les figures 4 et 5, chacun de ces ensembles comprend une enveloppe tubulaire verticale 102, fermée à ses extrémités, qui traverse la bride de toit 20a en étant fixée de façon étanche sur cette dernière.

L'enveloppe tubulaire 102 sert à loger un à trois sous ensembles tel qu'un sous ensemble 104 d'arrivée de réactifs, un sous ensemble 106 portant une sonde de conductimétrie 108 ou un sous ensemble 110 portant une sonde de température (non représentée).

Chacun de ces sous ensembles 104, 106 et 110 comporte un tube enveloppe extérieur 112 dans lequel est reçu de façon étanche le tube guide 26 de la figure 1, obturé à ses extrémités par les bouchons 28 et 29. Ces bouchons sont reliés par une tige verticale 116 assurant la rigidité mécanique du sous ensemble correspondant.

Dans le cas du sous ensemble d'arrivée de réactifs 104, un ou plusieurs tubes capillaires 24 cheminent verticalement dans le tube guide 26 et au travers des bouchons 28 et 29, pour relier les injecteurs de réactif 22 (figure 1) à la cuve 10 de préparation chimique correspondante. Un ou plusieurs tubes 118 de plus grand diamètre peuvent également cheminer verticalement dans le tube guide 26, par exemple pour assurer l'amenée d'eau de dilution dans la cuve 10 de préparation chimique considérée.

Les sous ensembles 106 et 110 portant respectivement la sonde de conductimétrie 108 et la sonde de température (non représentée) comportent respectivement un câble coaxial vertical 107 et un câble 111 formé de trois conducteurs électriques verticaux, qui relient les sondes correspondantes à une instrumentation extérieure, au travers de la bride de toit 20a de l'enceinte.

De préférence, les tubes enveloppes extérieurs 112 sont fixés à l'enveloppe extérieure 102 de l'ensemble correspondant et les tubes guides sont aptes à coulisser vers le haut dans les tubes enveloppes extérieurs, pour permettre le remplacement du sous ensemble correspondant, tout en assurant le confinement lorsque les différents sous ensembles sont en place.

Le pilotage du dispositif d'analyses automatisé illustré sur les figures 1 à 5 est réalisé de façon autonome à l'aide du microprocesseur 50 qui pilote selon des programmes préétablis la mise en oeuvre des moteurs 16 des agitateurs, des injecteurs de réactifs 22, des moyens de rinçage et de séchage, des éjecteurs à air 44 et 62, des appareils d'analyses 37 associés aux cuves d'analyses 36, etc.. Ce pilotage permet d'assurer de façon satisfaisante la gestion simultanée de plusieurs analyses sans interférence avec l'automate pilotant les systèmes placés en amont, et notamment les moyens distributeurs 18.

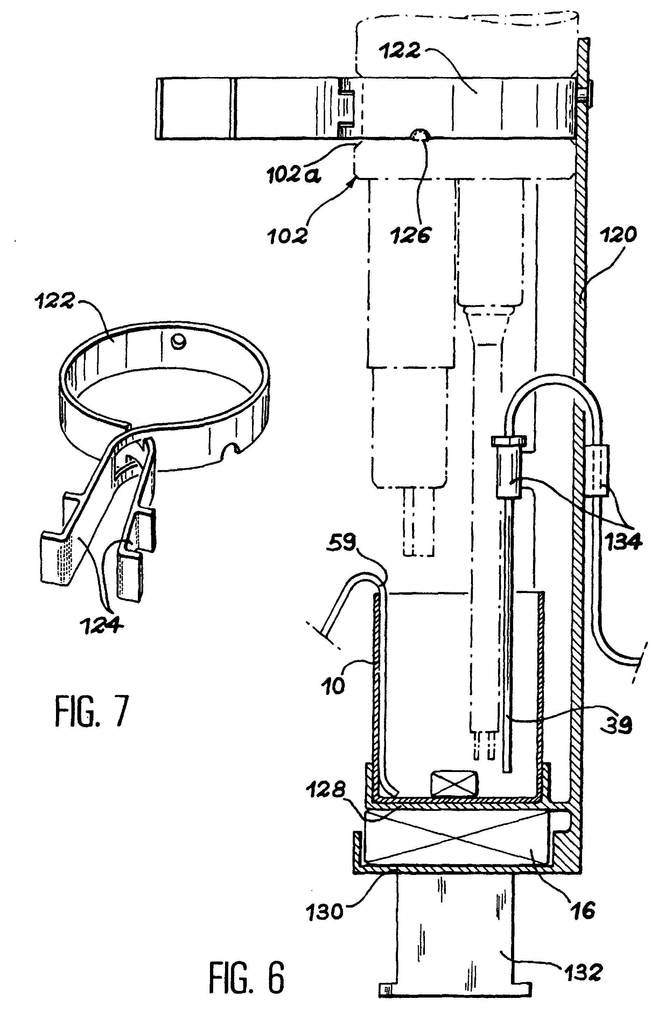

Dans une deuxième forme de réalisation de l'invention, qui va à présent être décrite brièvement en se référant aux figures 6 et 7, chacune des cuves de préparation chimique 10 est montée indépendamment des autres cuves, sur un support individuel 120 apte à être monté sur la partie inférieure de l'enveloppe tubulaire verticale 102 de la ligne d'analyse correspondante. Cet agencement permet de réaliser, à l'aide d'une seule pince, la mise en place et la maintenance de chaque cuve 10, en assurant une totale indépendance entre les différentes lignes d'analyse.

De façon plus précise, le support individuel 120 se présente sous la forme d'un montant vertical, par exemple à section horizontale en forme d'arc de cercle. A son extrémité haute, ce montant vertical est solidaire d'un collier de fixation 122, apte à être monté sur la partie inférieure de l'enveloppe tubulaire verticale 102.

Le collier 122 est un collier articulé, à fermeture rapide et de préférence à ressort. Comme l'illustre schématiquement la figure 7, il est équipé d'une double pince 124 permettant d'accrocher et de décrocher le collier de l'enveloppe 102, à l'aide d'une seule pince de manutention. Lorsque le collier 122 est libéré, il pénètre dans une région 102a, de moindre diamètre, de l'enveloppe tubulaire 102 (figure 6). Le positionnement angulaire du support 120 par rapport à l'axe vertical de l'enveloppe 102 peut notamment être assuré par un ergot 126 faisant saillie radialement vers l'extérieur sur la région 102a, de moindre diamètre, de l'enveloppe, et apte à pénétrer dans une encoche formée dans le collier 122.

A son extrémité basse, le support 120 porte un premier plateau horizontal 128 sur lequel repose la cuve d'analyse 10, et un deuxième plateau horizontal 130, situé sous le plateau 128 et sur lequel est placé l'agitateur 16. Un plot de préhension 132 est monté sous le deuxième plateau 130.

Le support 120 peut aussi être équipé de guides 134 servant au montage du tube rigide 39 de la ligne de transfert. Le tube rigide 59 de la ligne de vidange est, quant à lui, incorporé à la cuve 10.

La description qui précède, qui n'est donnée qu'à titre d'exemples non limitatifs, fait apparaître que le dispositif d'analyses automatisé conforme à l'invention permet de réaliser simultanément plusieurs analyses en limitant la durée totale de celles-ci à la durée de l'analyse la plus longue. Une amélioration de la productivité est ainsi obtenue, en même temps qu'une réduction sensible des déchets solides et des effluents liquides.

De plus, les formes de réalisation décrites permettent d'intégrer aisément le dispositif selon l'invention dans une enceinte existante, sans que celle-ci ait à subir de modification majeure.

Il est à noter que les moyens distributeurs peuvent être constitués par un système totalement différent de celui qui a été décrit, et comprendre par exemple un bras animé d'un mouvement de translation rectiligne au-dessus des cuves 10 de préparation chimique, par exemple au moyen d'un dispositif à vis sans fin, d'un robot ou de tout autre système. Dans ce cas, les cuves 10 ne sont plus disposées en arc de cercle, mais alignées.

## Revendications

1. Dispositif d'analyses automatisé comprenant :
- au moins deux lignes d'analyses incluant chacune :
• une cuve fixe (10) de préparation chimique ;
• des moyens d'agitation (14,16) d'un liquide placé dans la cuve ;
• des moyens d'injection (26,24) de réactifs dans la cuve (10) ;
• une cuve d'analyse (36) équipée de moyens d'analyse ;
• une ligne de transfert (40,42,46) du liquide placé dans la cuve de préparation (10) dans la cuve d'analyse (36), puis de la cuve d'analyse vers un système (38) d'évacuation d'effluents ;
• une ligne de vidange (60,64) reliant directement la cuve de préparation chimique (10) au système d'évacuation des effluents (38) ;
- des moyens distributeurs (18) pour introduire un échantillon de liquide à analyser dans au moins l'une des cuves de préparation chimique (10) ; et
- des moyens de gestion (50) pilotant au moins les moyens d'agitation, les moyens d'injection, les moyens d'analyse, la ligne de transfert et la ligne de vidange,
dans lequel chaque ligne de transfert comprend un premier tube (40) reliant la cuve (10) de préparation chimique à la cuve (36) d'analyse, un deuxième tube (42) reliant la cuve (36) d'analyse à un premier éjecteur à air (44) commun à toutes les lignes d'analyse et relié au système d'évacuation des effluents et une vanne placée dans le deuxième tube, en amont de l'éjecteur à air.

2. Dispositif selon la revendication 1, dans lequel les cuves (10) de préparation chimique sont placées dans une enceinte étanche (20), les moyens d'injection des réactifs comprenant au moins un appareil d'injection (22) placé à l'extérieur de l'enceinte et au moins un cathéter (24) reliant cet appareil d'injection à la cuve de préparation chimique, ce cathéter traversant une bride de toit (20a) de l'enceinte et étant placé, en dessous de cette bride, dans un tube-guide vertical (26).

3. Dispositif selon la revendication 2, **caractérisé par le fait que** chaque vanne (48,66) est une vanne à commande pneumatique actionnée par une électrovanne de commande placée à l'extérieur de l'enceinte.

4. Dispositif selon la revendication 2, **caractérisé par le fait que** chaque vanne (48,66) est une électrovanne noyée dans une résine protectrice.

5. Dispositif selon la revendication 2, **caractérisé par le fait que** chaque cuve (10) de préparation chimique est montée sur un support individuel (120) monté par un collier de fixation articulé (122) sur le tube-guide vertical (26) associé à cette cuve (10).

6. Dispositif selon l'une quelconque des revendications précédentes, **caractérisé par le fait que** l'éjecteur à air (44) comporte une alimentation en air moteur (56) à pression constante et une temporisation programmée.

7. Dispositif selon l'une quelconque des revendications précédentes, **caractérisé par le fait que** la ligne de vidange comprend un troisième tube (60) reliant la cuve de préparation chimique à un deuxième éjecteur à air (62) commun à toutes les lignes d'analyse et relié au système (38) d'évacuation des effluents, et une deuxième vanne (66) placée dans le troisième tube, en amont du deuxième éjecteur (62).

8. Dispositif selon l'une quelconque des revendications précédentes, **caractérisé par le fait que** ligne d'analyse comprend, de plus, une conduite d'amenée (70) de liquide de rinçage dans la cuve (10) de préparation chimique et une conduite de séchage (72) de cette cuve.

9. Dispositif selon selon l'une quelconque des revendications précédentes, **caractérisé par le fait que** les cuves (10) de préparation chimique des lignes d'analyses sont montées sur un même plateau escamotable (12) mobile verticalement entre une position haute de travail et une position basse de maintenance.

10. Dispositif selon selon l'une quelconque des revendications précédentes, **caractérisé par le fait que** les moyens distributeurs (18) comprennent un embout d'aspiration vertical (82) monté sur des moyens de positionnement (70), de façon à pouvoir être placé à volonté, par un actionnement de ces moyens de positionnement, au-dessus d'un récipient (84) contenant le liquide à analyser ou au-dessus de l'une quelconque des cuves (10) de préparation chimique.

11. Dispositif selon selon l'une quelconque des revendications précédentes, **caractérisé par le fait que** chaque ligne d'analyse comprend de plus des moyens de mesure ou de contrôle (30) placés dans la cuve (10) de préparation chimique et reliés à une installation extérieure à l'enceinte par un câble vertical (34).

## Patentansprüche

1. Automatisierte Analysevorrichtung mit:
mindestens zwei Analyseleitungen, die jeweils aufweisen:
- einen feststehenden Behälter (10) zur chemischen Aufbereitung,
- Rührmittel (17,16) für eine in den Behälter eingebrachte Flüssigkeit,
- Mittel (26,24) zum Einspritzen von Reagentien in den Behälter (10),
- einen Analysebehälter (36), der mit Analysemitteln versehen ist,
- eine Leitung (40,42,46) zum Übertragen der in den Aufbereitungsbehälter (10) eingebrachten Flüssigkeit in den Analysebehälter (36), und dann vom Analysebehälter zu einem System (38) zum Evakuieren bzw. Abziehen von Abgängen,
- eine Abzugsleitung (60,64), welche den Behälter (10) zur chemischen Aufbereitung mit dem Evakuierungssystem von Abgängen (38) direkt verbindet,
Verteilungsmitteln (18) zum Einleiten einer Probe der zu analysierenden Flüssigkeit in mindestens einen der Behälter zur chemischen Aufbereitung (10), und
Steuermitteln (50) die mindestens die Rührmittel, die Einspritzmittel, die Analysemittel, die Übertragungsleitung und die Abzugsleitung steuern,
wobei jede Übertragungsleitung ein erstes Rohr (40) umfasst, welches den Behälter (10) zur chemischen Aufbereitung mit dem Analysebehälter (36) verbindet, ein zweites Rohr (42), welches den Analysebehälter (36) mit einem ersten Lufteinspritzelement (44) verbindet, das allen Analyseleitungen gemeinsam ist und das Evakuierungssystem der Abgänge und ein in dem zweiten Rohr angeordnetes Ventil stromauf von der Lufteinspritzvorrichtung verbindet.

2. Vorrichtung nach Anspruch 1, wobei die Behälter (10) zur chemischen Aufbereitung in einem dichten Gehäuse (20) angeordnet sind, die Einspritzmittel der Reagentien mindestens einen außerhalb des Gehäuses angeordneten Einspritzapparat (22) und mindestens einen diesen Einspritzapparat mit dem Behälter zur chemischen Aufbereitung verbindenden Katheder (24) aufweisen, wobei dieser Katheder einen Dachbügel (20a) des Gehäuses durchquert und unterhalb dieses Bügels in einem vertikalen Führungsrohr (26) angeordnet ist.

3. Vorrichtung nach Anspruch 2, **dadurch gekennzeichnet, dass** jedes Ventil (48, 66) ein Ventil mit pneumatischer Steuerung ist, das von einem außerhalb des Gehäuses angeordneten Elektrosteuerventil betätigt wird.

4. Vorrichtung nach Anspruch 2, **dadurch gekennzeichnet, dass** jedes Ventil (48, 66) ein in ein Schutzharz eingebettetes Elektroventil ist.

5. Vorrichtung nach Anspruch 2, **dadurch gekennzeichnet, dass** jeder Behälter (10) zur chemischen Aufbereitung auf einem individuellen Träger (120) angebracht ist, der über eine gelenkige Befestigungsstelle (122) an dem diesem Behälter (10) zugeordneten vertikalen Führungsrohr (26) angebracht ist.

6. Vorrichtung nach einem der vorangehenden Ansprüche, **dadurch gekennzeichnet, dass** die Lufteinspritzvorrichtung (44) eine Motor-Luftzufuhr (56) mit konstantem Druck und einer programmierten Zeitsteuerung umfasst.

7. Vorrichtung nach einem der vorangehenden Ansprüche, **dadurch gekennzeichnet, dass** die Abzugsleitung ein drittes Rohr (60), welches den Behälter zur chemischen Aufbereitung mit einer zweiten Lufteinspritzvorrichtung (62) verbindet, welche allen Analyseleitungen gemeinsam ist und mit dem System (38) zur Evakuierung von Abgängen verbunden ist, sowie ein zweites, in dem dritten Rohr stromauf von der zweiten Einspritzvorrichtung (62) angeordnetes Ventil (66) umfasst.

8. Vorrichtung nach einem der vorangehenden Ansprüche, **dadurch gekennzeichnet, dass** die Analyseleitung außerdem eine Zuführleitung (70) für Spülflüssigkeit in den Behälter (10) zur chemischen Aufbereitung und eine Trockenlegungsleitung (72) für diesen Behälter aufweist.

9. Vorrichtung nach einem der vorangehenden Ansprüche, **dadurch gekennzeichnet, dass** die Behälter (10) zur chemischen Aufbereitung der Analyseleitungen an einem versenkbaren bzw. einfahrbaren Plateau (12) angebracht sind, das vertikal zwischen einer oberen Arbeitsposition und einer unteren Wartungsposition beweglich ist.

10. Vorrichtung nach einem der vorangehenden Ansprüche, **dadurch gekennzeichnet, dass** die Verteilermittel (18) einen vertikalen Ansaugstutzen (82) umfassen, der an den Positionierungsmitteln (70) derart angebracht ist, dass er beliebig durch eine Betätigung dieser Positionierungsmittel oberhalb eines Behältnisses (84), das die zu analysierende Flüssigkeit enthält, oder oberhalb irgendeines der Behälter (10) zur chemischen Aufbereitung angeordnet werden kann.

11. Vorrichtung nach einem der vorangehenden Ansprüche, **dadurch gekennzeichnet, dass** jede Analyseleitung außerdem Mess- oder Steuermittel (30) aufweist, die in dem Behälter (10) zur chemischen Aufbereitung angeordnet und mit einer Installation außerhalb des Gehäuses durch ein vertikales Kabel (34) verbunden sind.

## Claims

1. Automated analysis apparatus, comprising:
at least two analysis lines, each including:
- a fixed chemical preparation cell (10),
- a means (14, 16) for stirring a liquid placed in the cell,
- means (26, 24) for injecting reagents into the cell (10),
- an analysis cell (36) equipped with analysis means,
- a line (40, 42, 46) for transferring liquid placed in the preparation cell (10) into the analysis cell (36) and then from the latter to an effluent discharge system (38),
- a discharge line (60, 64) directly linking the chemical preparation cell (10) to the effluent discharge system (38),
distributing means (18) for introducing a liquid sample to be analyzed into at least one of the chemical preparation cells (10) and
control means (50) controlling at least the stirring means, the injection means, the analysis means, the transfer line and the discharge line, wherein each transfer line incorporates a first tube (40) connecting the chemical preparation cell (10) to the analysis cell (36), a second tube (42) connecting the analysis cell (36) to a first air ejector (44) common to all the analysis lines and connected to the effluent discharge system and a valve placed in the second tube upstream of the air ejector.

2. Apparatus according to claim 1, wherein the chemical preparation cells (10) are placed in a tight enclosure (20), the reagent injection means comprising at least one injection apparatus (22) positioned outside the enclosure and at least one catheter (24) connecting said injection apparatus to the chemical preparation cell, said catheter passing through an enclosure top flange (20a) and being placed, beneath said flange, in a vertical guide tube (26).

3. Apparatus according to claim 2, wherein each valve (48, 66) is a pneumatic control valve actuated by a control electrovalve positioned outside the enclosure.

4. Apparatus according to claim 2, wherein each valve (48, 66) is an electrovalve embedded in a protective resin.

5. Apparatus according to claim 2, **characterized** each chemical preparation cell (10) is mounted on an individual support (120) fitted by a fixing collar (122) articulated to the vertical guide tube (26) associated with said cell (10).

6. Apparatus according to any one of the preceding claims, **characterized in that** the air ejector (44) has a constant pressure, programmed timing, motorized air supply (56).

7. Apparatus according to any one of the preceding claims, **characterized in that** the discharge line comprises a third tube (60) connecting the chemical preparation cell to a second air ejector (62) common to all the analysis lines and connected to the effluent discharge system (38), and a second valve (66) placed in the third tube, upstream of the second ejector (62).

8. Apparatus according to any one of the preceding claims, **characterized in that** the analysis line also comprises a duct (70) for supplying rinsing liquid to the chemical preparation cell (10) and a duct (72) for drying said cell.

9. Apparatus according to any one of the preceding claims, **characterized in that** the chemical preparation cells (10) of the analysis lines are mounted on the same retractable plate (12), which moves vertically between an upper working position and a lower maintenance position.

10. Apparatus according to any one of the preceding claims, **characterized in that** the distributor means (18) comprise a vertical suction fitting (82) mounted on positioning means (70), so that at random it can be placed by an actuation of the positioning means above a receptacle (84) containing the liquid to be analyzed or above any random one of the chemical preparation cells (10).

11. Apparatus according to any one of the preceding claims, **characterized in that** each analysis line also comprises measuring or control means (30) placed in the chemical preparation cell (10) and connected to an installation outside the enclosure by a vertical cable (34).
